# EUROPÄISCHE PATENTSCHRIFT

(11) **EP 3 060 824 B1**
(45) Veröffentlichungstag und Bekanntmachung des Hinweises auf die Patenterteilung: **23.08.2017**
(21) Anmeldenummer: 14784085.4
(22) Anmeldetag: 15.10.2014
(51) Int. Cl.: F16D 65/12

(54) **VERFAHREN ZUR HERSTELLUNG EINER BREMSSCHEIBE SOWIE BREMSSCHEIBE**
METHOD FOR MANUFACTURING A BRAKE DISC, AND BRAKE DISC
PROCÉDÉ DE FABRICATION D'UN DISQUE DE FREIN ET DISQUE DE FREIN

(30) Priorität: 25.10.2013 DE 102013221737
(43) Veröffentlichungstag der Anmeldung: 31.08.2016
(73) Patentinhaber: Ford Global Technologies, LLC, Dearborn, MI 48126 (US)
(72) Erfinder: BRODA, Maik, 52146 Würselen (DE); BRUGGEN, Ivan, B-3770 Riemst (BE); GRABIEC, Tomasz Pawel, 51427 Bergisch Gladbach (DE); VERPOORT, Clemens Maria, 40789 Monheim (DE)
(74) Vertreter: Dörfler, Thomas
(86) Internationale Anmeldenummer: PCT/EP2014/072130
(87) Internationale Veröffentlichungsnummer: WO 2015/059011

(56) Entgegenhaltungen:
- EP-A1- 1 987 267
- DE-A1-102009 003 161
- DE-B1- 1 625 680

## Beschreibung

Die vorliegende Erfindung betrifft ein Verfahren zur Herstellung einer Bremsscheibe für ein Fahrzeug, sowie eine Bremsscheibe für ein Fahrzeug.

Die DE AS 1 625 680 befasst sich mit einem Reibkörper für Nass-Kupplungen und - Bremsen, mit einem Träger und mindestens einem an dem Träger angebrachten, gesinterten, porösen und metallischen Reibbelag. Vorgeschlagen wurde, dass der Reibbelag aus Metallfasern besteht, wobei der Porositätsgrad mindestens 50 % betragen soll.

Aus der DE 10 2010 049 797 A1 ist bekannt, dass eine Bremsscheibe integral mit einer Radnabe hergestellt werden kann, so dass der Planschlag der Bremsscheibe reduzierbar sein soll. Zudem könnten die Reibflächen der Bremsscheibe mit einer Reibbeschichtung versehen sein, die aus einem Hartmetall oder aus einer Keramik bestehen kann.

Die EP 1 987 267 B1 beschäftigt sich mit einer Bremsscheibe, die auf der Verwendung von Materialien beruht, wovon eines eine strukturelle Funktion und das andere eine Bremsfunktion erfüllen soll. Die Bremsscheibe umfasst eine Träger- oder strukturelle Scheibe, deren Seiten mit einer ersten und einer zweiten Reibscheibe ausgerüstet sind. Die Reibscheiben sind aus geeignetem Material zum Erfüllen der Bremsfunktion hergestellt. Die strukturelle Scheibe ist aus Verbundmaterial hergestellt. Das Verbundmaterial der strukturellen Scheibe kann aus einem Harz wahlweise zwischen Epoxid-, Phenol-, Cyanatester-, Cyanepoxid-, Keramikharzen und Email oder einer Kombination aus diesen bestehen. Die Reibscheiben können aus einem zwischen Stahl, Gusseisen, gehärtetem Aluminium, Aluminiumoxid (Keramik), Siliciumcarbid, Siliciumnitrid, Titancarbid und Carbon-Keramik gewähltem Material hergestellt sein.

Bei Fahrzeugen, insbesondere bei Kraftfahrzeugen, bilden Scheibenbremsen die wohl am weitesten verbreitete Bauart von Bremsanlagen. Scheibenbremsen setzen sich im Wesentlichen aus einer Bremsscheibe und einem die Bremsscheibe randseitig umgreifenden Bremssattel zusammen. Hierbei ist die Bremsscheibe über eine drehbar im Achsschenkel gelagerte Radnabe mit dem abzubremsenden Rad des Fahrzeugs verbunden. Demgegenüber ist der Bremssattel an dem Achsschenkel fixiert. Die eigentliche Verzögerung wird durch an die Bremsscheibe anlegbare Bremsklötze erreicht, welche zu beiden Seiten der Bremsscheibe zwischen ihr und dem Bremssattel angeordnet sind.

Je nach Anwendungsfall können Bremsscheiben sowohl aus Eisen, z.B. aus Grauguss (GG) aber auch aus Karbon-Keramik oder Aluminium bestehen. Dabei sollten Bremsscheiben eine möglichst verschleißarme sowie wenig Feinstaub abgebende Oberfläche aufweisen. Um dies zu erreichen, wird eine möglichst harte Oberfläche angestrebt. So wird beispielsweise bei Bremsscheiben aus Aluminium entsprechend Siliziumkarbid (SiC) zugesetzt, welche sich als verschleißfeste Schutzschicht an der Oberfläche ausscheiden. Allerdings ist die Herstellung von Bremsscheiben aus nicht-eisenhaltigen Werkstoffen mitunter schwierig und zumeist kostenintensiv.

Eine andere Form der Ausbildung einer solchen Schutzschicht kann mit thermischem Spritzen erreicht werden. Hierbei wird das auf die Oberfläche eines Basiskörpers der Bremsscheibe aufzutragende Material zuvor durch Hitzeeinwirkung erweicht und in Form einzelner Partikel über einen Gasstrom beschleunigt. Beim Auftreffen der Partikel entsteht eine rein mechanische Verbindung ohne Aufschmelzen der Oberfläche des Basiskörpers. Bei den Materialien kann es sich um Metalle sowie oxidkeramische oder karbidische Werkstoffe handeln. Nachteilig hierbei ist neben den hohen Kosten insbesondere die Haltbarkeit derartiger Schutzschichten. So ist zumeist nur eine mäßige Aufrauhung der Oberfläche mittels Sandstrahlen möglich, was zu keiner dauerhaft haltbaren mechanischen Verbindung führt. Speziell bei der Verwendung von hartem Gusseisen für den Basiskörper ist beispielsweise ein an sich vorteilhaftes Schwalbenschwanz-förmiges Aufrauen nicht möglich.

Bei dem Abrieb zwischen dem Bremsbelag und der Bremsscheibe entstehen also Partikelemissionen, also Feinstaub. Neben der Feinstaub-Problematik spielt aber auch die optische Wirkung von verrosteten Bremsscheiben in Kombination mit teuren Aluminium-Felgen eine zusätzliche Rolle. Es ist bekannt, dass ca. 70% der Feinstaubpartikel von dem GG-Scheibenmaterial stammen. Diese Verschleißpartikel haben eine sehr hohe Temperatur von bis zu 700°C, mit der sie auf die Aluminium-Felge auftreffen. Dabei können sie sich in den Klarlack auf der Aluminium-Oberfläche einfach einbrennen und das Entfernen des grau-schwarzen Belags ist selbst in der Waschanlage und bei intensiver Pflege sehr schwierig. Zudem werden zusätzlich Quietschgeräusche oder Bremsenrubbeln bei festgerosteten Belägen nach längerem Stillstand als störend angesehen.

Möglich wäre die gebildeten Feinstaubpartikel durch eine Art Staubsauger hinter der Bremsscheibe aufzufangen und sie in einem Filterelement, z.B. in einem Papierfilter zu sammeln. Dadurch lässt sich zwar die Verschmutzung der Umwelt bzw. die Bildung von dreckigen Aluminium-Felgen verhindern bzw. minimieren, allerdings wird dadurch das grundlegende Verschleiß- und Korrosionsproblem nicht gelöst.

Möglich ist auch, sog. temporäre, kostengünstige Schutzschichten vorzusehen, damit zumindest die Fahrzeuge vom Hersteller bis zum Händler gelangen, ohne dass das fabrikneue Fahrzeug mit rostigen Bremsscheiben beim Händler im Verkaufsraum ausgestellt werden muss. Dabei handelt sich meist um Farb-Spritzschichten mit Zink-Pigmenten. Andererseits sind Bremssysteme bekannt, bei denen Zink auf die GG-Oberfläche während des Bremsvorganges aufgerieben wird und dadurch ein kathodischer Korrosionsschutz auftritt. Andererseits hat dieser Zink-Film eine negative Wirkung auf die Reib-Funktion des Bremsbelages, die Reibwerte sinken ab.

Möglich wäre auch, eine Nitrier-Diffusions-Beschichtung auf der Basis von Fe-Nitrid. Diese Beschichtung führt zu einem kurzzeitigen Verschleiß- und Korrosionsschutz; die Lebensdauer dieser Beschichtung ist dabei begrenzt. In Ländern mit hohen zulässigen Geschwindigkeiten für Fahrzeuge, z.B. Deutschland, resultieren daraus hohe Bremstemperaturen, weswegen in diesen Ländern die NAO-Beläge nicht geeignet sind. Darüber hinaus ist der Prozess sehr zeitintensiv und durch die notwendige große Ofenkammer sehr teuer.

Ebenso werden zahlreiche thermische Spritzverfahren (diese wurden oben bereits erwähnt) und galvanische Beschichtungsverfahren eingesetzt. Diese Schichten sind sehr aufwendig in der Herstellung. Bei den galvanischen Verfahren muss das gesamte Bauteil z.B. mit Chrom oder Nickel oder Ni plus Hartstoffpartikel beschichtet werden. Bei Salzsprühnebeltests schneiden aber sowohl solche galvanischen Beschichtungen also auch thermisch gespritzte Beschichtungen eher schlecht ab. So ist die Unterwanderung von thermischen Spritzschichten selbst mit zusätzlichen Versieglungsverfahren nicht sicher zu vermeiden.

Angesichts des aufgezeigten Standes der Technik bietet die einfache und haltbare Fertigung von Bremsscheiben als Massenartikel noch Raum für Verbesserungen.

Vor diesem Hintergrund liegt der Erfindung die Aufgabe zugrunde, ein Verfahren zur Herstellung einer Bremsscheibe für ein Fahrzeug vorzustellen, welches eine kostengünstige und dennoch haltbare Massenfertigung ermöglicht. Weiterhin soll eine Bremsscheibe für ein Fahrzeug aufgezeigt werden, welche neben einer kostengünstigen Fertigung insbesondere eine verbesserte Resistenz gegenüber korrosiven Angriffen und eine verbesserte Lebensdauer besitzt.

Der verfahrensmäßige Teil der Aufgabe findet seine Lösung in den Maßnahmen des Anspruchs 1. Der gegenständliche Teil dieser Aufgabe wird durch eine Bremsscheibe mit den Merkmalen des Anspruchs 11 gelöst. Weitere, besonders vorteilhafte Ausgestaltungen der Erfindung offenbaren die jeweiligen Unteransprüche.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Gemäß der Erfindung wird nachfolgend ein Verfahren zur Herstellung einer Bremsscheibe für ein Fahrzeug vorgestellt, bei welchem auf einem Basiskörper der Bremsscheibe zumindest bereichsweise eine Schutzschicht angeordnet wird. Erfindungsgemäß umfasst das Verfahren zumindest die folgenden Schritte:
- Zumindest bereichsweises Vorbearbeiten des im Rohling vorliegenden Basiskörpers;
- Zumindest bereichsweises Aufbringen einer Email-Beschichtung auf den Basiskörper, und
- Nachbehandlung des zumindest bereichsweise beschichteten Basiskörpers, wobei sich die Email-Beschichtung mit dem Grundwerkstoff des Basiskörpers metallurgisch durch Phasenbildung verbindet.

Bei der erfindungsgemäßen Email-Beschichtung handelt es sich bevorzugt um ein Schmelzgemisch. Bei der Emailtemperatur schmelzen die glasbildenden Oxide zu einer Glasschmelze zusammen. Glasbildende Oxide können dabei SiO₂, B₂O₃, Na₂O, K₂O und Al₂O₃ sein. Grundemails weisen ca. 23 - 34 Gew% (Gewichtsprozente) Borax, 28 - 52 Gew% Feldspat, 5 - 20 Gew% Quarz, ca. 5 Gew% Fluorid, sowie als Rest Soda und Natriumnitrat auf. Als Trübungsmittel können die Oxide von Ti, Zr und Mo dienen.

Um zu erreichen, dass die Email-Beschichtung fest auf dem metallischem Untergrund, also auf dem Grundwerkstoff des Basiskörpers haftet, sind beispielsweise Bestandteile von Kobalt-, Mangan- oder Nickel-Oxiden vorgesehen. Möglich ist noch, keramische Pigmente, wie z.B. Eisenoxide, Chromoxide und Spinelle einzusetzen.

Die genannten Stoffe werden in bevorzugter Ausgestaltung fein gemahlen und geschmolzen. Die Schmelze wird abgeschreckt, also bevorzugt in Wasser gegeben, wobei die so entstehende körnige glasartige Fritte im sich anschließenden Schritt wieder fein gemahlen wird. Beim dem Mahlvorgang werden beispielsweise 30 % bis 40 % Wasser zusammen mit Ton und Quarzmehl zugesetzt. Je nach Art des Emails kommen noch die erwähnten Trübungsstoffe und Farboxide hinzu.

So wird ein Emailschlicker gebildet, welcher zur besseren Mischung einige Zeit, bevorzugt einige Tage ruhen sollte, bevor der Emailschlicker weiterverwendet würde. Durch Verwendung geeigneter Stellmittel wird sichergestellt, dass sich eine gleichmäßige Schichtdicke z.B. nach einer Tauchbeschichtung ergibt, wobei auf eine mögliche Tauchbeschichtung noch näher eingegangen wird.

Die Bremsscheibe, also deren Basiskörper wird bevorzugt mittels Sandguss hergestellt. Dabei weist der Basiskörper, also der Rohling einen umlaufenden äußeren Bremskranz auf, welcher für den Kontakt mit einem Bremsklotz eines Bremssattels vorgesehen ist, wobei die Bremsklötze bzw. Bremsbeläge natürlich beidseitig des Bremskranzes, also der Reibflächen angreifen. Im Zentrum des Basiskörpers ist eine Öffnung vorgesehen, welche in einer Ausstellung des Basiskörpers angeordnet ist. Um die Öffnung herum sind in gleichmäßigen Abständen bevorzugt fünf Durchgangslöcher durch die Ausstellung hindurch angeordnet. Besagte Durchgangslöcher dienen der Aufnahme von Radbolzen, über welche die Bremsscheibe zusammen mit einem Rad mit einer Radnabe verbindbar ist. Die Ausstellung, welche auch als Scheibenhut bezeichnet werden kann, kann integral mit dem Bremskranz hergestellt werden, also gegossen werden, oder als separates Element mit dem Bremskranz in geeigneter Weise verbunden werden. Der Basiskörper kann als unbelüftete oder belüftete Bremsscheibe hergestellt sein, was an sich bekannt ist. Bei der belüfteten Bremsscheibe sind die Reibflächen an Deckscheiben angeordnet, wobei die gegenüberliegenden Deckscheiben über Rippen beabstandet sind. Jede Deckscheibe weist natürlich auch nur eine Reibfläche auf, was aber an sich bekannt ist. So ist ein Luftspalt zwischen den Deckscheiben gebildet, was aber an sich auch bekannt ist, weswegen darauf nicht weiter eingegangen wird.

Dieser Rohling wird sodann zumindest bereichsweise vorbearbeitet, wobei insbesondere die zukünftigen Reibflächen vorbearbeitet werden. Die Vorbearbeitung kann mittels mechanischer Verfahren erfolgen, wobei die Vorbearbeitung bevorzugt mittels Drehverfahren, weiter bevorzugt mittels Trocken-Drehverfahren (trockendrehen) durchgeführt wird. Dabei werden die zu beschichtenden Bereiche, also z.B. die Reibflächen bevorzugt so bearbeitet, dass diese eine Rauigkeit von z.B. 6 bis 7 µm aufweisen. Zur Vorbearbeitung ist auch ein Sandstrahlen möglich, wobei noch andere geeignete Vorbearbeitungsverfahren nicht ausgeschlossen sein sollen.

Sind zumindest die Reibflächen vorbearbeitet, kann die Email-Beschichtung aufgetragen werden. Dies kann mittels Aufsprühen erfolgen, wobei aber auch ein Auftragen durch Streichen oder in einem Tauchbad sinnvoll sein kann. Insofern ist es zweckmäßig, wenn die Beschichtung, also der Emailschlicker als Nass-Email-Beschichtung aufgebracht wird.

Bei dem Aufsprühen ist sinnvoll vorgesehen, dass die Email-Beschichtung als wässrige Suspension (Emailschlicker) aufgetragen wird. Vorteilhaft ist dabei, dass zumindest der vorbearbeitete Bereich sehr gut erreichbar ist, da die Sprühvorrichtung individuell den zu beschichtenden Bereich abdecken kann. Die Beschichtung kann so aufgebracht werden, dass bevorzugt der Basiskörper rotiert. Möglich ist, die Bremsscheibe mit 80 U/min rotieren zu lassen. Die Email-Beschichtung kann mit einem Druck von z.B. 2 bis 4 bar durch Zerstäuben mit Druckluft aufgesprüht werden. So kann die Email-Beschichtung innerhalb kürzester Zeit von z.B. 20 Sekunden in der gewünschten Materialstärke aufgetragen werden, wobei die Förderrate des Emailschlickers durch automatische Parameterüberwachung, z.B. mittels computergesteuerten Spritzrobotern in engen Grenzen regelbar ist, um die jeweilige Email-Beschichtung mit jeweils geringen Dickenschwankungen herstellen zu können. Bei dem erfindungsgemäßen Verfahren wird bevorzugt ein einstufiger Email-Beschichtungsvorgang gewählt. Insofern kann auf das getrennte Auftragen von Grundemail und Deckemail verzichtet werden, da nur ein einstufiges Aufbringen bevorzugt ist. Eine rotierende Sprühvorrichtung ist bei feststehender zu beschichtender Scheibenbremse auch möglich, aber nicht bevorzugt. Insofern kann lediglich der Bereich der Reibflächen mit der Email-Beschichtung versehen werden. Dies kann so bei unbelüfteten, aber auch bei belüfteten Bremsscheiben erfolgen. In weiter möglicher Ausgestaltung kann der Basiskörper in einem Tauchbad beschichtet werden, wobei ebenfalls eine wässrige Lösung (Emailschlicker) vorgesehen ist. Auch hierbei kann lediglich der Bremskranz, also lediglich die Reibflächen beschichtet werden. Dabei wird der Basiskörper nicht vollständig in das Tauchbad eingetaucht, sondern lediglich so tief, dass der Bremskranz bereichsweise eintaucht. Durch Rotation der Bremsscheibe wird so der gesamte Bremskranz beschichtet. Insbesondere eine belüftete Bremsscheibe ist sinnvoller Weise mittels des Tauchbades mit der Email-Beschichtung zu versehen, da die Nass-Email-Beschichtung auch vollständig in den Zwischenraum zwischen beiden Deckscheiben gelangen kann so dass auch die den Reibflächen gegenüberliegenden Innenflächen beschichtet werden können, wobei natürlich die Rippen ebenfalls beschichtet werden können.

Anstelle einer bereichsweisen Beschichtung, bei welcher nur der Bremskranz, also die Reibflächen beschichtet werden, kann der Basiskörper auch vollständig beschichtet werden. So ist die Bremsscheibe dann vollständig gegen Korrosion geschützt. Zweckmäßig ist dann vorgesehen, dass der Basiskörper auch vollständig vorbearbeitet wird.

Möglich ist dabei wiederum eine Email-Beschichtung mittels einer Sprühvorrichtung oder im Tauchbad vorzusehen. Im Tauchbad wird die Bremsscheibe vollständig eingetaucht, wenn die Bremsscheibe vollständig beschichtet werden soll. Eine Rotation derselben ist nicht erforderlich, kann aber angestrebt werden. Wird die Email-Beschichtung mittels der Sprühvorrichtung aufgebracht, können zumindest in ihrer Farberscheinung unterschiedliche Email-Beschichtungen aufgetragen werden. Die Ausstellung, also der Scheibenhut z.B. könnte auch bei Lichtmangel hellleuchtend ausgeführt sein. Dies ist sinnvoll, da die Ausstellung selbst keinen Reibkräften ausgesetzt ist, wie die Reibflächen. Gleichwohl könnten natürlich auch die Reibflächen mit einer bestimmten Farberscheinung ausgeführt werden, wenn sichergestellt wäre, dass die Farberscheinung auch nach dem angreifen der Bremsbeläge, also nach Verschleiß an den jeweiligen Reibflächen unverändert bliebe.

Ist die Bremsscheibe zumindest bereichswiese beschichtet, wird diese in einem weiteren Schritt nachbehandelt. Dazu ist vorteilhaft vorgesehen, dass die Email-Beschichtung nach dem Auftragen zunächst getrocknet wird, wobei anschließend eine Glühbehandlung vorgesehen ist. Zu Trocknen der Email-Beschichtung wird die Bremsscheibe einer Trockenvorrichtung zugeführt, wobei die Email-beschichtete Bremsscheibe bei etwa 90 bis 120°C, auch bei etwa 80 bis 100°C über eine Zeitdauer von 5 bis 30 min getrocknet wird. In bevorzugter Ausgestaltung des Verfahrens wird der Trocknungsvorgang in einem Umluftofen durchgeführt. Zur sich anschließenden Wärmebehandlung wird die Email-beschichtete Bremsscheibe in einem Durchlaufofen bei etwa 800 bis 940°C beispielsweise im Durchlaufofen geglüht. So kann sich die Email-Beschichtung metallurgisch durch Phasenbildung mit den Grundwerkstoff des Basiskörpers verbinden. Bei diesem Einbrennvorgang wird das Ausbilden einer dichten, geschlossenen Oxid-Schicht erreicht, die gegenüber dem Korrosionsangriff von Regenwasser und insbesondere auch Salzwasser sehr widerstandsfähig ist.

Erfindungsgemäße Email-Beschichtungen zeichnen sich gegenüber den Galvanik- oder Spritzbeschichtungen dadurch aus, dass sie nicht unterwandert werden können. Wenn Schutzschichten unterwandert werden, dann bildet sich die Fe-Oxid-Phase unter der Beschichtung aus, was dann zu einer starken Volumenvergrößerung, verbunden mit dem Abplatzen der Deckschicht, führt. Zielführend ist auch, dass erfindungsgemäße Email-Beschichtungen auch dann nicht weiter geschädigt werden, wenn durch lokalen Schaden (Steinschlag, mechanische Beschädigung) die Schicht bis zum Grundwerkstoff abgetragen ist. Es wird dann nur im Bereich der fehlenden Email-Beschichtung ein Rostschaden auftreten, sich aber nicht weiter vergrößern. Ein weiterer Vorteil der erfindungsgemäßen Email-Beschichtung ist darin zu sehen, dass diese ein sehr niedriges Gewicht hat, was in der chemischen Zusammensetzung der Aluminiumoxide, Silikate usw. sowie in der Email-typischen Poren und Blasenstruktur begründet ist.

Neben dieser guten Korrosionsbeständigkeit zeichnet sich die erfindungsgemäße Email-Beschichtung aus durch gute Verschleißbeständigkeit aufgrund der hohen Schichthärte, die eine bis zu dreifach höhere Härte besitzen kann als bei dem Grauguss-Basismaterial. Die Beständigkeit gegen Verschleiß und/oder Thermorisse kann weiter gesteigert werden durch die Verwendung von sog. "teilkristallinen Emails", bei denen kristallisierende Ausscheidungen in der Glasmatrix die Verschleißbeständigkeit gegenüber konventionellen Emails erhöhen. Zielführend ist auch, dass das Verschleißverhalten der Emails drastisch verbessert werden kann durch Einlagerung von nanoskaligen Hartstoffen. Diese karbidischen Hartstoffe setzen dem Verschleiß einen deutlich höheren Widerstand entgegen als die amorphe Emailmatrix. Durch Variation der Karbid-Partikelgröße lässt sich der Verschleißwiderstand weiter optimieren.

Als Grundwerkstoff kann bevorzugt Grauguss (GG) Verwendung finden.

Optional kann die Email-Beschichtungsoberfläche nach dem Schritt des Einbrennens noch einer Schlussbehandlung, also einem Finish unterzogen werden. Bevorzugt ist vorgesehen, die Reibflächen drehend zu bearbeiten und die Zunderschicht, welche aufgrund des Glühprozesses entstand zu entfernen.

Die Bremsscheiben können natürlich ohne jegliche Bearbeitung im Bereich der Reibfläche verwendet werden. Durch Verwendung von dünneren Email-Schichten sowie die Verwendung von Induktionsspulen zur Einsinterung der Schichten unter rotierender Bewegung lässt sich ein möglicher Höhenschlag und auch die Rauigkeit minimieren. Möglich ist auch, eine Nachbearbeitung der Scheiben durch ein Nachschleifen, wobei Diamant- oder Hartstoff-Topfscheiben zum Einsatz kommen. Denkbar ist eine Nachbearbeitung mittels Drehen, was trotz der hohen Härte aufgrund der Sprödigkeit machbar ist, wobei PKD (Polykristalliner Diamant) Wendeschneidplättchen bevorzugt sind.

Zielführend ist, wenn eine Email-Beschichtung mit einer Schichtdicke von 50 µm bis 1000 µm aufgetragen wird. Damit lassen sich Bremsscheiben herstellen, die eine Lebensdauer von mehr als 240.000 km aufweisen könnten, abhängig von der Schichtdicke der Email-Beschichtung.

Damit die Verschleißbeständigkeit ausreichend hoch ist, hat es sich als nützlich erwiesen, die Zusammensetzung der Email-Beschichtung so anzupassen, dass nach dem Einsintern, also nach dem Glühvorgang Härtewerte von > 650 HV0,1 vorliegen. Außerdem ergibt sich mit dieser Zusammensetzung eine nicht komplett durchgeschmolzene glasartige Email-Beschichtung mit den email-typischen glatten Oberflächen, sondern eher rauen Oberfläche, hervorgerufen durch den höheren Anteil an kristallinen Phasen. Idealerwiese kann der Kristall-Anteil 20 %, aber auch 30 - 50 % betragen.

Das Emaillier-Verfahren gemäß der Erfindung ist aufgrund der hervorragenden Korrosions- und Verschleißbeständigkeit der Reibschicht besonders geeignet zum Herstellen von Bremsscheiben. Darüber hinaus liefert das erfindungsgemäße Verfahren die Möglichkeit, durch Zugabe von bestimmten Oxiden die Reibwerte in weiten Grenzen so einzustellen, dass konventionelle Reibbeläge verwendet werden können, wobei sowohl die Korrosionsbeständigkeit als auch die Verschleißbeständigkeit im Bezug auf konventionelle Graugussbremsscheiben erheblich verbessert sind.

Die Email-Beschichtung kann zusätzlich eingefärbt werden, wodurch individuell verschiedene Farben gewählt werden können, wie bereits oben erwähnt wurde.

Mit der Erfindung kann eine Email-Beschichtung auf der gesamten Bremsscheibe als Korrosionsschutz (Verhinderung von Rot-Rost) aufgebracht werden, wobei die Email-Beschichtung auch nur im Bereich der Reibfläche, als Verschleiß-Belag mit angepasstem Reibungskoeffizient (Vermeidung von Grind Noise) aufgebracht werden kann. Die Email-Beschichtung kann als dekorativer, leicht zu reinigender Belag im Bereich außerhalb der Reibbelag-Anlagefläche aufgebracht werden, wobei die Email-Beschichtung im Anlagebereich aufgebracht werden kann, um den Ausbau der Bremsscheibe (Verhinderung des Anrostens an Radnabe) zu verhindern. Das erfindungsgemäße Verfahren kann die Schritte Vor-Bearbeiten, Auftragen des Schlickers durch Tauchen/Sprühen, Trocken und Einsintern sowie Nacharbeit zur Erzielung einer gewünschten Rauigkeit aufweisen. Die Email-Beschichtung kann zudem eine wärmedämmende Wirkung haben, so dass die entstehende Wärme nicht so schnell abgeführt würde.

Obwohl ein einstufiges Beschichtungsverfahren bevorzugt ist, ist es möglich dass die Scheibe vollständig in einem kostengünstigen Emailschlicker eintaucht, was besonders bei belüfteten Scheiben mit den vielen Stegen zwischen den beiden Deckscheiben zweckmäßig ist, wobei dann in einem nachfolgenden Sprühauftrag im Bereich zwischen Reibbelagsfläche und Topf-Anlagefläche (Scheibenhut) eine teure, hochwertige farbige Emailschicht aufgetragen wird. Grundsätzlich können sich an der Email-Beschichtung keine Rostpartikel bilden, so dass ein Grind-Noise-Problem, wie dies bei konventionellen Graugussbremsscheiben auftreten kann vermieden ist.

Bevorzugt weisen die mit einer Email-Beschichtung versehenen Kanten des Basiskörpers einen Radius R auf, der mindestens 3-mal größer ist als die Schichtdicke der Email-Beschichtung im Bereich des Radius der Kanten. Damit wird eine gleichmäßige Schichtdicke im Bereich von Kanten sichergestellt. Bei zu scharfen Übergängen bzw. Kanten kann die dort entstehende Emailschicht zu dünn werden.

Weitere vorteilhafte Einzelheiten und Wirkungen der Erfindung sind im Folgenden anhand von unterschiedlichen, in den Figuren dargestellten Ausführungsbeispielen näher erläutert. Es zeigen:
- Fig. 1: eine schematische Darstellung einer erfindungsgemäßen Bremsscheibe in einer Aufsicht,
- Fig.2: Die Bremsscheibe aus Figur 1 in einer Schnittansicht,
- Fig. 3: einen Detailausschnitt aus Figur 2, und
- Fig. 4: eine belüftete Bremsscheibe in einer perspektivischen Ansicht.

In den unterschiedlichen Figuren sind gleiche Teile stets mit denselben Bezugszeichen versehen, so dass diese in der Regel auch nur einmal beschrieben werden.

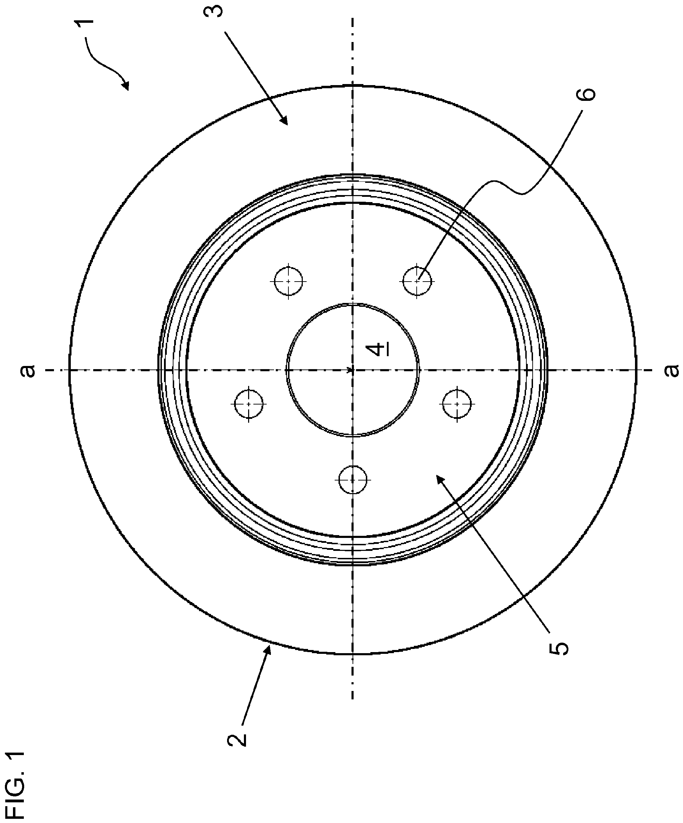

Fig. 1 ist eine schematische Darstellung einer erfindungsgemäßen Bremsscheibe 1 zu entnehmen. Diese weist einen kreisrunden Basiskörper 2 beispielhaft aus Gusseisen, also z.B. aus Grauguss (GG) auf. Der Basiskörper 2 besitzt in typischer Weise einen umlaufenden äußeren Bremskranz 3, welcher für den Kontakt mit einem nicht näher dargestellten Bremsbelag vorgesehen ist. Im Zentrum des Basiskörpers 2 ist eine Öffnung 4 vorgesehen, welche in einer Ausstellung 5 des Basiskörpers 2 angeordnet ist. Die Ausstellung 5 kann auch als Scheibenhut 5 bezeichnet werden. Um die Öffnung 4 herum sind in gleichmäßigen Abständen vorliegend fünf Durchgangslöcher 6 durch die Ausstellung 5 hindurch angeordnet. Besagte Durchgangslöcher 6 dienen der Aufnahme hier nicht näher dargestellter Radbolzen, über welche die Bremsscheibe 1 zusammen mit einem nicht gezeigten Rad mit einer ebenfalls nicht gezeigten Radnabe verbindbar ist.

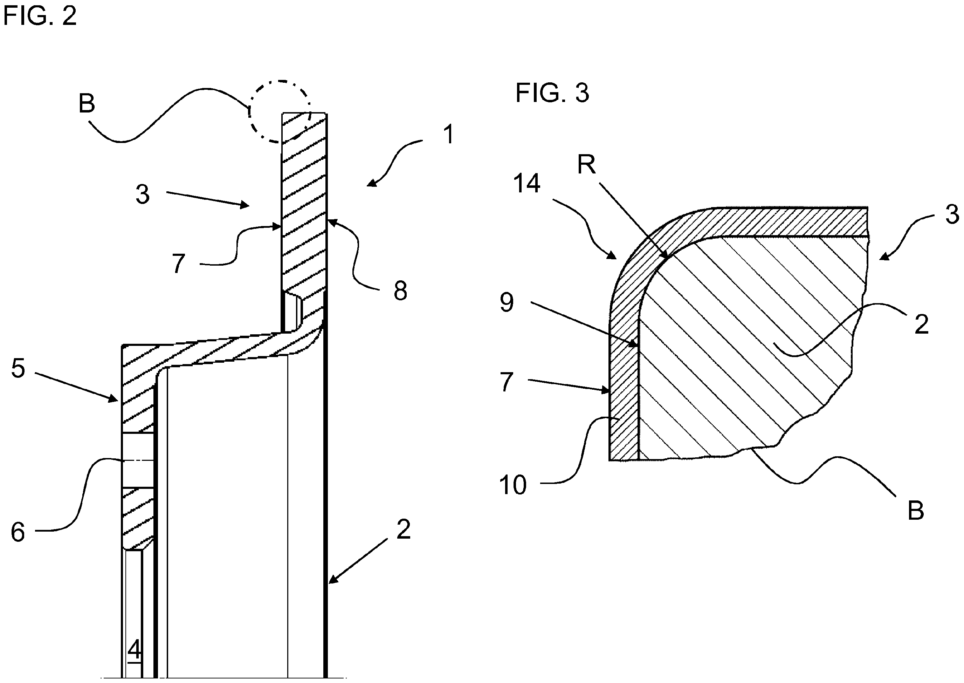

Fig. 2 zeigt einen Schnitt durch die Ebene a-a der Bremsscheibe 1 aus Fig. 1. Wie zu erkennen, steht die Ausstellung 5 gegenüber dem Bremskranz 3 des Basiskörpers 2 vor. Der Bremskranz 3 umfasst zwei parallel zueinander ausgerichtete Bremsflächen, also Reibflächen 7, 8, also eine erste Reibfläche 7 und eine zweite Reibfläche 8. In Figur 2 ist ein strichpunktierter Kreis B eingezeichnet, wobei der Bereich des Bremskranzes 3 innerhalb des Kreises B Inhalt der Fig. 3 ist.

Fig. 3 zeigt einen Detailausschnitt des Bremskranzes 3 aus Fig. 2 innerhalb des Kreises B. Der Vergrößerung des Bremskranzes 3 im Bereich seiner ersten Reibfläche 7 ist zu entnehmen, dass auf einer Oberfläche 9 des Basiskörpers 2 in diesem Bereich eine Email-Beschichtung 10 aufgebracht ist. Die Email-Beschichtung 10 bedeckt hier auch die äußere Umfangsfläche. Insofern kann die gesamte Bremsscheibe 1 eine Email-Beschichtung 10 aufweisen. Denkbar ist aber auch, wenn nur die Reibflächen 7 und 8 die Email-Beschichtung 10 aufweisen.

Die Kante 14 ist mit einem Radius R ausgeführt, damit in diesem Bereich eine gleichmäßige Emailschicht aufgetragen wird. Dabei beträgt der Radius R ungefähr das 3-fache der Schichtdicke der Email-Beschichtung 10. Größere Radien sind unproblematisch, bei kleineren Radien kann die Schichtdicke im Bereich der Kante 14 ungleichmäßig verteilt sein.

Die Email-Beschichtung 10 kann auch zumindest bereichsweise auf der Bremsscheibe aufgebracht werden, wobei nur die Reibflächen 7 und 8 mit der Email-Beschichtung 10 versehen sind. Möglich ist aber auch, wie erwähnt, die Bremsscheibe 1 vollständig mit der Email-Beschichtung zu versehen. Die Email-Beschichtung kann mittels Sprühvorrichtungen oder im Tauchbad aufgebracht werden.

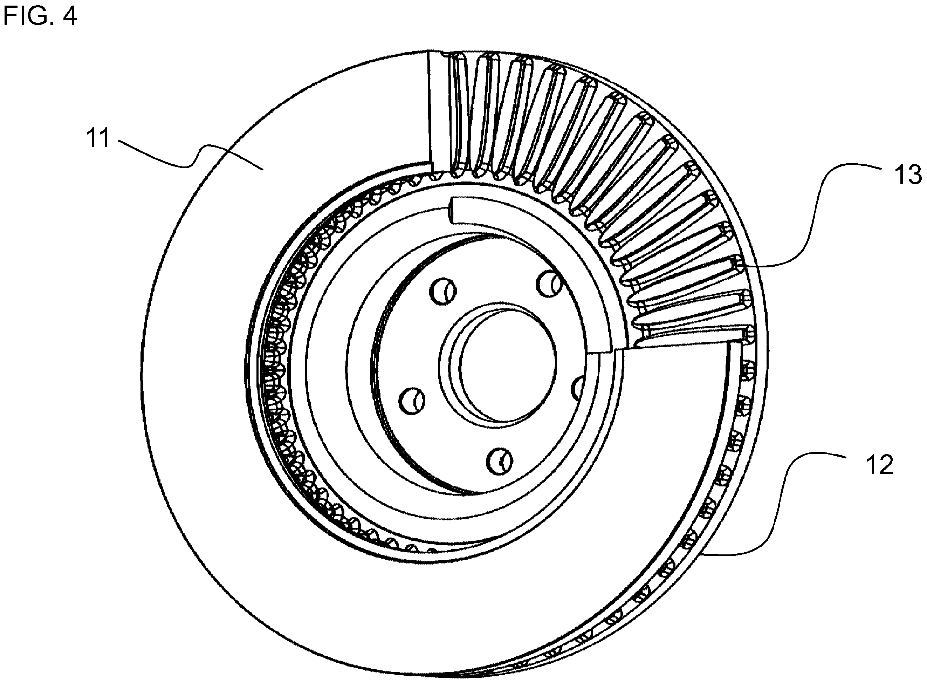

Figur 4 zeigt eine Bremsscheibe 1, welche Deckscheiben 11 und 12 aufweist zwischen denen Rippen 13 angeordnet sind, so dass eine belüftete Bremsscheibe 1 gebildet ist. Auch die belüftete Bremsscheibe kann die Email-Beschichtung 10 nur an ihren Reibflächen 7 und 8 aufweisen. Günstig ist aber, wenn die belüftete Bremsscheibe 1 vollständig mit Emaille beschichtet ist. Dazu kann die belüftete Bremsscheibe 1 in ein Tauchbad gegeben werden, so dass auch die Innenflächen der einander gegenüberliegenden Deckscheiben 11 und 12 sowie die Rippen 13 mit Emaille beschichtet sind.

Möglich ist auch, wenn die Bremsscheibe 1 unterschiedliche Email-Beschichtungen aufweist. So ist bevorzugt an den Reibflächen 7 und 8 eine Beschichtung wählbar, welche erforderliche Reibkoeffizienten hat, so dass die Funktion der Bremsscheibe 1 bestehen bleibt. An den außerhalb der zum Verzögern des Fahrzeuges erforderlichen Flächen kann die Bremsscheibe eine Email-Beschichtung aufweisen, welche z.B. Signalwirkungen in Form von auch bei Dunkelheit hell leuchtenden Farben aufweist. Es liegt durchaus im Sinne der Erfindung auch die Reibflächen mit entsprechender signalisierender Email-Beschichtung zu versehen.

Auf jeden Fall sollte die Bremsscheibe vor dem Aufbringen der Email-Beschichtung 10 zumindest bereichsweise vorbearbeitet werden. Günstig ist, den Bereich der Bremsscheibe 1 zu bearbeiten, welcher auch beschichtet werden soll.

Nach dem Aufbringen der Email-Beschichtung 10, ist ein Trocknen sowie eine Glühbehandlung vorgesehen. Optional kann noch eine mechanische Nachbearbeitung vorgenommen werden.

### Bezugszeichenliste

- 1: Bremsscheibe
- 2: Basiskörper
- 3: Bremskranz
- 4: Öffnung
- 5: Ausstellung/Scheibenhut
- 6: Durchgangsloch
- 7: erste Bremsfläche/Reibfläche
- 8: zweite Bremsfläche/Reibfläche
- 9: Oberfläche
- 10: Email-Beschichtung
- 11: Deckscheibe
- 12: Deckscheibe
- 13: Rippen
- 14: Kante
- R: Radius

## Patentansprüche

1. Verfahren zur Herstellung einer Bremsscheibe (1) für ein Fahrzeug, bei welchem auf einem Basiskörper (2) der Bremsscheibe (1) eine Schutzschicht angeordnet wird,
umfassend zumindest die folgenden Schritte:
- Zumindest bereichsweises Vorbearbeiten des im Rohling vorliegenden Basiskörpers (2);
- Zumindest bereichsweises Aufbringen einer Email-Beschichtung (10) auf den Basiskörper (2), und
- Nachbehandlung des zumindest bereichsweise beschichteten Basiskörpers (2), wobei sich die Email-Beschichtung (10) mit dem Grundwerkstoff des Basiskörpers (2) metallurgisch durch Phasenbildung verbindet.

2. Verfahren nach Anspruch 1,
**dadurch gekennzeichnet, dass**
die Email-Beschichtung (10) ein Schmelzgemisch ist, welches glasbildende Oxide sowie Borax, Feldspat, Quarz, Fluorid, Soda, Natriumnitrat und Trübungsmittel aufweist.

3. Verfahren nach Anspruch 1 oder 2,
**dadurch gekennzeichnet, dass**
die Email-Beschichtung (10) Kobalt-, Mangan- und/oder Nickeloxide aufweist.

4. Verfahren nach einem der vorhergehenden Ansprüche,
**dadurch gekennzeichnet, dass**
zumindest Reibflächen (7,8) der Bremsscheibe vorbearbeitet werden.

5. Verfahren nach einem der vorhergehenden Ansprüche,
**dadurch gekennzeichnet, dass**
die zumindest bereichsweise Vorbearbeitung der Bremsscheibe (1) mittels eines Drehverfahrens, bevorzugt mittels eines Trockendrehverfahrens durchgeführt wird.

6. Verfahren nach einem der vorhergehenden Ansprüche,
**dadurch gekennzeichnet, dass**
der vorbearbeitete Bereich eine Rauigkeit von 6 bis 7 µm aufweist.

7. Verfahren nach einem der vorhergehenden Ansprüche,
**dadurch gekennzeichnet, dass**
die Email-Beschichtung (10) durch Aufsprühen aufgebracht wird.

8. Verfahren nach einem der Ansprüche 1 bis 6,
**dadurch gekennzeichnet, dass**
die Email-Beschichtung (10) in einem Tauchbad aufgebracht wird.

9. Verfahren nach einem der vorhergehenden Ansprüche,
**dadurch gekennzeichnet, dass**
die aufgebrachte Email-Beschichtung (10) getrocknet wird, wobei die Bremsscheibe (1) daran anschließend einer Glühbehandlung unterzogen wird.

10. Verfahren nach einem der vorhergehenden Ansprüche,
**dadurch gekennzeichnet, dass**
die aufgebrachte Email-Beschichtung (10) einer mechanischen Nachbearbeitung unterzogen wird.

11. Bremsscheibe für ein Fahrzeug, hergestellt mit einem Verfahren nach einem der vorhergehenden Ansprüche, umfassend einen Basiskörper (2) mit einer zumindest bereichsweise angeordneten Schutzschicht,
**dadurch gekennzeichnet, dass**
der Basiskörper (2) zumindest bereichsweise eine Email-Beschichtung (10) aufweist.

12. Bremsscheibe nach Anspruch 11,
**dadurch gekennzeichnet, dass**
die Email-Beschichtung (10) zumindest an Reibflächen (7,8) angeordnet ist.

13. Bremsscheibe nach Anspruch 11 oder 12,
**dadurch gekennzeichnet, dass**
die Email-Beschichtung (10) vollständig am Basiskörper (2) angeordnet ist.

14. Bremsscheibe nach einem der Ansprüche 11 bis 13,
**dadurch gekennzeichnet, dass**
die Email-Beschichtung (10) eine Dicke zwischen 50 und 1000 µm aufweist.

15. Bremsscheibe nach einem der Ansprüche 11 bis 14,
**dadurch gekennzeichnet, dass**
mit einer Email-Beschichtung (10) versehene Kanten des Basiskörpers (2) einen Radius R aufweisen, der mindestens 3-mal größer ist als die Schichtdicke der Email-Beschichtung (10) im Bereich des Radius der Kanten.

16. Bremsscheibe nach einem der Ansprüche 11 bis 15,
**dadurch gekennzeichnet, dass**
der Basiskörper (2) aus Grauguss (GG) besteht.

## Claims

1. Method for producing a brake disk (1) for a vehicle, in which a protective layer is arranged on a main body (2) of the brake disk (1),
comprising at least the following steps:
- premachining at least some region or regions of the main body (2) present in the blank;
- applying an enamel coating (10) to the main body (2) at least in some region or regions, and
- aftertreating the main body (2) coated at least in some region or regions, **characterized in that** the enamel coating (10) bonds metallurgically to the base material of the main body (2) by phase formation.

2. Method according to Claim 1,
**characterized in that**
the enamel coating (10) is a fused mixture, which contains glass-forming oxides as well as borax, feldspar, quartz, fluoride, sodium carbonate, sodium nitrate and opacifiers.

3. Method according to Claim 1 or 2,
**characterized in that**
the enamel coating (10) contains cobalt oxides, manganese oxides and/or nickel oxides.

4. Method according to one of the preceding claims,
**characterized in that**
at least friction surfaces (7, 8) of the brake disk are premachined.

5. Method according to one of the preceding claims,
**characterized in that**
the premachining of the brake disk (1) at least in some region or regions is performed by means of a turning method, preferably by means of a dry turning method.

6. Method according to one of the preceding claims,
**characterized in that**
the premachined region has a roughness of 6 to 7 µm.

7. Method according to one of the preceding claims,
**characterized in that**
the enamel coating (10) is applied by spraying.

8. Method according to one of the preceding claims,
**characterized in that**
the enamel coating (10) is applied in a dipping bath.

9. Method according to one of the preceding claims,
**characterized in that**
the applied enamel coating (10) is dried, **characterized in that** the brake disk (1) is then subjected to a baking treatment.

10. Method according to one of the preceding claims,
**characterized in that**
the applied enamel coating (10) is subjected to mechanical finish machining.

11. Brake disk for a vehicle, produced by a method according to one of the preceding claims, comprising a main body (2) having a protective layer arranged at least in some region or regions,
**characterized in that**
the main body (2) has an enamel coating (10) at least in some region or regions.

12. Brake disk according to Claim 11,
**characterized in that**
the enamel coating (10) is arranged at least on friction surfaces (7, 8).

13. Brake disk according to Claim 11 or 12,
**characterized in that**
the enamel coating (10) is arranged completely on the main body (2).

14. Brake disk according to one of Claims 11 to 13,
**characterized in that**
the enamel coating (10) has a thickness of from 50 to 1000 µm.

15. Brake disk according to one of Claims 11 to 14,
**characterized in that**
edges of the main body (2), which are provided with an enamel coating (10), have a radius R which is at least 3 times larger than the layer thickness of the enamel coating (10) in the region of the radius of the edges.

16. Brake disk according to one of Claims 11 to 15,
**characterized in that**
the main body (2) is composed of grey cast iron (GG) .

## Revendications

1. Procédé de fabrication d'un disque de frein (1) pour un véhicule, selon lequel une couche de protection est agencée sur un corps de base (2) du disque de frein (1) ,
comprenant au moins les étapes suivantes :
- le prétraitement au moins en zones du corps de base (2) présent à l'état d'ébauche ;
- l'application au moins en zones d'un revêtement d'émail (10) sur le corps de base (2) ; et
- le post-traitement du corps de base (2) revêtu au moins en zones, le revêtement d'émail (10) étant relié au matériau de base du corps de base (2) métallurgiquement par formation de phase.

2. Procédé selon la revendication 1, **caractérisé en ce que** le revêtement d'émail (10) est un mélange fondu qui comprend des oxydes formant du verre, ainsi que du borax, du feldspath, du quartz, un fluorure, de la soude, du nitrate de sodium et un agent opacifiant.

3. Procédé selon la revendication 1 ou 2, **caractérisé en ce que** le revêtement d'émail (10) comprend des oxydes de cobalt, de manganèse et/ou de nickel.

4. Procédé selon l'une quelconque des revendications précédentes, **caractérisé en ce qu'**au moins les surfaces de frottement (7, 8) du disque de frein sont prétraitées.

5. Procédé selon l'une quelconque des revendications précédentes, **caractérisé en ce que** le prétraitement au moins en zones du disque de frein (1) est réalisé au moyen d'un procédé rotatif, de préférence au moyen d'un procédé rotatif de séchage.

6. Procédé selon l'une quelconque des revendications précédentes, **caractérisé en ce que** la zone prétraitée présente une rugosité de 6 à 7 µm.

7. Procédé selon l'une quelconque des revendications précédentes, **caractérisé en ce que** le revêtement d'émail (10) est appliqué par pulvérisation.

8. Procédé selon l'une quelconque des revendications 1 à 6, **caractérisé en ce que** le revêtement d'émail (10) est appliqué dans un bain d'immersion.

9. Procédé selon l'une quelconque des revendications précédentes, **caractérisé en ce que** le revêtement d'émail appliqué (10) est séché, le disque de frein (1) étant ensuite soumis à un traitement de recuit.

10. Procédé selon l'une quelconque des revendications précédentes, **caractérisé en ce que** le revêtement d'émail appliqué (10) est soumis à un post-traitement mécanique.

11. Disque de frein pour un véhicule, fabriqué par un procédé selon l'une quelconque des revendications précédentes, comprenant un corps de base (2) muni d'une couche de protection agencée au moins en zones, **caractérisé en ce que** le corps de base (2) comprend au moins en zones un revêtement d'émail (10).

12. Disque de frein selon la revendication 11, **caractérisé en ce que** le revêtement d'émail (10) est agencé au moins sur les surfaces de frottement (7, 8).

13. Disque de frein selon la revendication 11 ou 12, **caractérisé en ce que** le revêtement d'émail (10) est entièrement agencé sur le corps de base (2).

14. Disque de frein selon l'une quelconque des revendications 11 à 13, **caractérisé en ce que** le revêtement d'émail (10) présente une épaisseur comprise entre 50 et 1 000 µm.

15. Disque de frein selon l'une quelconque des revendications 11 à 14, **caractérisé en ce que** les bords munis d'un revêtement d'émail (10) du corps de base (2) présentent un rayon R qui est au moins 3 fois supérieur à l'épaisseur de couche du revêtement d'émail (10) dans la zone du rayon des bords.

16. Disque de frein selon l'une quelconque des revendications 11 à 15, **caractérisé en ce que** le corps de base (2) est constitué de fonte grise.
